(19) Europäisches Patentamt
European Patent Office
Office européen des brevets

(11) **EP 2 337 326 B1**

(12) **EUROPÄISCHE PATENTSCHRIFT**

(45) Veröffentlichungstag und Bekanntmachung des Hinweises auf die Patenterteilung:
**19.02.2014 Patentblatt 2014/08**

(51) Int Cl.:
***H04M 3/53*** *(2006.01)*

(21) Anmeldenummer: **09179315.8**

(22) Anmeldetag: **15.12.2009**

(54) **Verfahren und Vorrichtung zur Hervorhebung ausgewählter Objekte in Bild- und Videonachrichten**

Method and device for highlighting selected objects in image and video messages

Procédé et dispositif d'accentuation d'objets sélectionnés dans des informations imagées et vidéo

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**22.06.2011 Patentblatt 2011/25**

(73) Patentinhaber: **Deutsche Telekom AG**
**53113 Bonn (DE)**

(72) Erfinder:
• **Runge, Dipl.-Ing., Fred**
**15838, Wünsdorf (DE)**

• **Scheerbarth, Thomas**
**12555 Berlin (DE)**

(74) Vertreter: **2K Patentanwälte Blasberg Kewitz & Reichel**
**Partnerschaft**
**Schumannstrasse 27**
**60325 Frankfurt am Main (DE)**

(56) Entgegenhaltungen:
**WO-A1-2004/054216      WO-A1-2006/047347**

**Beschreibung**

Die Erfindung betrifft ein Video und/oder Bildnachrichten System und bezieht sich insbesondere auf ein Verfahren und eine Anordnung, mit dem/der einem Empfänger Nachrichten, die im Rahmen des Systems, beispielsweise über eine Mail-Box, übermittelt werden, in denen Bildinformationen des Sprechers der Nachrichten enthalten sind. Dem Empfänger sollen Nachrichten in möglichst authentischer Form mit einem verbesserten Informationsgehalt angeboten werden, bei dem der Sprecher der Bild- und/oder Videonachricht in besonderer Form hervorgehoben wird.

**Stand der Technik**

Messaging Systeme (Mobilbox, Voicemail Systeme) sind im Markt hinlänglich bekannt (siehe z.B. http://www.t-mobile.de/mobilbox). In Abhängigkeit von der Systemstruktur werden auch oft Sprach-, Bild- und/oder Videonachrichten als Anhänge von Textnachrichten (Emailanhänge gemeinsam mit Absenderinformationen (z.B. Absenderkennung (z.B. CLI, HLR, Absenderadr. u.ä.) als komplette Videonachrichten in Videomailboxen auf Basis der Videotelefonie analog zu schon seit langem existierenden Voice-Mailbox oder digitalen Anrufbeantwortern usw. abgespeichert.

Auch kann als allgemein bekannter StdT vorausgesetzt werden, dass in computeranimierten Anwendungen Avatare eingesetzt werden, welche mit Funktionalitäten ausgestattet sind, die es ermöglichen, unter Anwendung von Sprachsynthese Texte auszugeben, wobei entsprechende Lippenbewegungen abgeleitet und dargestellt werden. Mit Mitteln der Gesichtsdetektion und Ermittlung von Gesichtsausschnitten, die durch bestimmte Gesichtselemente (z.B. Lippen) ausgefüllt sind, lassen sich über eine Kamera aufgenommene Lippenbewegungen eines Sprechers in den Lippenbereich eines unbewegten Fotos einfügen, welches die Rolle eines Avatars einnehmen kann (siehe http://www.logitech.com/index.cfm/webcam_communications/webcams/devices/3056&cl=de,de; Video Effects).

In EP1648151A1 ist offengelegt, dass Nachrichten zur späteren Bearbeitung für ein System zur maschinellen Übersetzung weiterer Nachrichten gespeichert werden. Jedoch liegt dabei der Schwerpunkt auf der Auswertung textueller und phonetischer Informationen, die in den gespeicherten Nachrichten enthalten sind. Dies gilt auch für Bildnachrichten, die ggf. Texte im Bild oder in Metainformationen enthalten. Eine Modifikation der Bildinhalte selbst wird dabei nicht beschrieben.

Die Darstellung von Bildern in Bildnachrichten bzw. Videonachrichten erfolgt zweidimensional, da die in Telekommunikationsendgeräten eingesetzten Aufnahmeverfahren auf der Ausstattung dieser Endgerät mit einer Kamera beruhen. Eine zusätzliche Ausstattung mit mehr als zwei Kameras in Kombination mit Übertragungsverfahren die eine höhere Bandbreite erfordern, ist naheliegend, jedoch in kompakteren Geräten aufgrund einer geringen Basisbreite und der daraus folgenden geringen 3D-Qualität nicht anzuraten. Damit ist eine 3D-Darstellung des Sprechers einer Bild- und/oder Videonachricht nur mit starken Qualitätseinbußen möglich.

Auch die Erweiterung von 2D-Avataren, die, wie oben beschrieben aus Fotos generiert werden können, auf 3D-Animationen mithilfe von jeweils zwei gleichzeitig aufgenommenen Abbildungen ist damit nur begrenzt und unter Qualitätseinbußen möglich.

Gleichzeitig zeigen Verfahren zur dreidimensionalen Darstellung von Bildern und/oder Videos immer größere Fortschritte (siehe http://www.elektroniknet.de/?id=3200&type=98), so dass hier auch ein Bedarf nach 3D-Darstellung von video-/Bild-Nachrichten entsteht.

Bekannt sind ebenfalls die 2D-Darstellung von virtuell erzeugten animierten Avataren, welche systemintern als vollständiges 3D-Modell vorliegen und z.B. Texte auf einem System bestehend aus Display und Lautsprecher wiedergeben, ohne dass dabei gleichzeitig ein rechtes und ein linkes Bild erzeugt werden (DE102004014189A1).

Aus der WO 2006/047347 ist ein Verfahren bekannt, bei dem einer Nachricht ein AVATAR durch einen Benutzer individuell zugefügt werden kann. Dieser Ansatz ist jedoch weder automatisiert noch werden bestehende Bilddaten verändert.

Eine echte 3D-Darstellung von Objekten oder Bildern beruht auf der (quasi-)gleichzeitigen Ausgabe von zwei 2D-Bildern, wobei ein Bild für das linke und das zweite Bild für das rechte Auge bestimmt ist.

Die Aufnahme mit seitlich versetzten Kameras zur Erzeugung von 3D-Bildern ist allgemein bekannt und soll hier nicht beschrieben werden. Auch existieren Methoden, aus einem einzelnen 2D-Bild künstliche 3D-Bilder aus vorhandenen Modellen zu generieren, deren Grundlage ein vollständiges 3D-Modell manuell annotierter/analysierter 2D-Objekte darstellt, welches durch die räumlichen Koordinaten einer größeren Anzahl von Punkten auf der Oberfläche der Objekte repräsentiert wird. Beispiele dafür sind EP1412917B1 und EP0991023B1.

Zur Betrachtung von 3D-Darstellungen existieren verschiedenen Verfahren mit Hilfsmitteln, z.B. über Linsenraster, Anaglyphenverfahren, Polarisationsbrillen usw.

Auch können zwei für das rechte und linke Auge vorgesehene 2D-Bilder hilfsmittellos über Kreuzblick oder Parallelblick betrachtet werden.

In US4925294A1 wurde versucht, ein allgemeines Verfahren zu beschreiben aus einem einzigen 2D Bild ein 3D-Bild zu generieren indem verschiedene Vorder- und Hintergrundbildelemente separiert und aus der Kenntnis von deren 3D-Charakteristiken aus dem 2D-Bild jeweils ein Rechts-und ein Linksbild zu generieren. In der folgenden Beschreibung werden für die Generierung immer zwei 2D-Bilder benötigt, aus denen dann jeweils ein 2D-Rechts- und ein 2D-Linksbild für ein 3D-Bild generiert wird, d.h. die beschriebene Kenntnis der Eigenschaften einzelner Objekte oder von Objektmodellen ist im unten beschriebenen Verfahren nicht erforderlich.

**Überblick über die Erfindung:**

Aufgabe der vorliegenden Erfindung ist die Hervorhebung der Person, die die Nachricht hinterlassen hat, als virtuellen Sprecher, durch Suchen von Bildern aus den Nachrichten und deren Animation.

Gelöst wird diese Aufgabe durch eine Erfindung mit den Merkmalen der unabhängigen Ansprüche.

Insbesondere werden die Sprecher in einer 3D-Darstellung gezeigt, wobei der reale Sprecher für das im folgenden beschriebene System auf der gleichzeitigen oder quasi-gleichzeitigen (Zeitraum innerhalb von wenigen Millisekunden, die für den Betrachter kaum wahrnehmbar sind) Ausgabe von zwei 2D-Bildern von Nachrichtensprechem beruht, wobei ein Bild für das linke und das zweite Bild für das rechte Auge bestimmt ist.

Zur hervorgehobenen Darstellung eines Sprechers werden aktuelle 2D-Bildnachrichten vergangener Bild- und/oder Video-Nachrichten eines gleichen Sprechers im Mailbox-System unter Auswertung der Absenderinformationen gesucht, diese aus den Bildern extrahiert und in ihrer Größe an eine einheitliche Größe der Sprecherdarstellung angepasst. Hierbei werden verschiedene Perspektiven (Links- und Rechtsbilder) der 2D-Einzelaufnahmen des Sprechers unter Anpassung von Helligkeits- und/oder Farbunterschieden zu einem 3D-Abbild verarbeitet. Es werden

a) zur 3D-Darstellung eines Sprechers einer aktuellen 2D-Videonachricht aus den Einzelbildern einer Videonachricht und/oder zusätzlich aus vergangenen Video-/Bildnachrichten des gleichen Sprechers (unter Auswertung der Absenderinformationen) die Sprecherabbildungen extrahiert, in ihrer Größe an eine einheitliche Größe der Sprecherdarstellung angepasst und in der gleichen Videoaufnahme, vergangenen Videoaufnahmen und/oder Bildern des Sprechers vorhandene verschiedene Perspektiven der Aufnahmen des Sprechers unter Anpassung von Helligkeits- und/oder Farbunterschieden zu einem 3D-Abbild des Sprechers verarbeitet.

b) zur 3D-Darstellung eines Sprechers aktueller Text- und/oder Sprachnachrichten, die Absenderinformationen der Nachrichten (z.B. Email, Voicemail, ...) ausgewertet und im Mailbox-System nach 2D-Bild- und/oder 2D-Videonachrichten und/oder bereits erstellten 3D-Abbildern dieses Sprechers gesucht und diese Informationen aus den Nachrichten extrahiert, in ihrer Größe an eine einheitliche Größe der Sprecherdarstellung angepasst und verschiedene Perspektiven der Aufnahmen des Sprechers unter Anpassung von Helligkeits-und/oder Farbunterschieden zu einem ggf. aktualisierten 3D-Abbild verarbeitet.

c) Abschließend erfolgt eine Modifikation der Bild- und/oder Videodaten der empfangenen Nachrichten durch Hervorhebung des absenderrelevanten Bildbereichs mit den unter a) und b) erzeugten Daten.

Um Bilder, bestimmten Einheiten (z.B. Personen) zuordnen zu können, werden diese gemeinsam mit Adressen/Absenderkennungen (wie z.B. Home Location Register (HLR), Calling Line Identification (CLI), IP-Adresse, Email-Adr., persönlichen Kennungen, ...) oder ähnlichen Adressinformationen gespeichert, wie dies z.B. für Video-Nachrichten und folglich den dort ggf. enthaltenen Bildinformationen der Fall ist.

In einer möglichen Ausführungsform müssen verschiedene Adressen/Kennungen einer Person untereinander in eine eindeutige Kennung umgesetzt werden, wenn z.B. über unterschiedliche Kommunikationswege eine Ablage von Nachrichten erfolgt.

Weitere Details können den Ansprüchen entnommen werden.

Im Einzelnen handelt es sich um ein Digitales Nachrichtensystem in dem eine Vielzahl von personengebundenen Nachrichten auf einem Speichersystem gespeichert wird. Hierbei handelt es sich vorzugsweise um mindestens einen stationären Server, der auf das Speichersystem zugreift. Es sind natürlich auch mobile Endgeräte zu berücksichtigen. Die Nachrichten können SMS, EMAIL, MMS, Bild-/Video-, Sprachnachrichten etc. sein, die vorzugweise durch einen zentralen Server entgegengenommen werden, um Sie dann z.B. über ein Web-Frontend wieder bereitzustellen, oder so anzureichern, dass Sie durch Client- oder Client/Server-Anwendungen in 2D oder 3D umgewandelt und dargestellt werden können. Es ist natürlich auch denkbar, dass alle Operationen auf einem mobilen Endgerät ablaufen und an die Nachricht ein Video-Film angehängt wird, der die Nachricht dann auf dem PDA, Telefon etc. optisch darstellt. Die Nachrichten sind mit Absenderadressen (z.B. Email, Telefonnummer etc.) versehen und ein Teil der Nachrichten umfasst ferner digitale Bilddaten oder Videodaten. Hierbei handelt es sich um Daten mit unterschiedlichen Anhängen, wie Video- oder Bildattachments.

Weitere Komponenten sind eine Einheit zum Identifizieren von Bildbereichen mit Gesichtern und/oder Personen in den digitalen Bild- oder Videodaten, die die gleiche Absenderadresse aufweisen. In der Regel wird diese durch bekannte Bild-/Gesichtserkennungsverfahren durchgeführt die auf einem Prozessor ablaufen.

Eine weitere Einheit dient zum Bestimmen von absenderrelevanten Bildbereichen aus den identifizierten Bildbereichen auf der Basis von Referenzbildern, die auf einem Speichersystem abgelegt sind. Hierbei soll das Bild des Absenders bestimmt werden, um daraus ein 2D/3D Modell eines virtuellen Sprechers zu erzeugen. Ein solches Verfahren kann auf Referenzbildern basieren, die korrespondierend (z.B. tabellarisch) zu einer Absenderadresse abgelegt ist. Falls ein solches nicht vorliegt kann auf der Basis von Spracherkennungsverfahren, unter Berücksichtigung von Sprachdaten in der Nachricht, in Referenzsprachdaten oder von Sprachdaten in den Videodaten, die miteinander verglichen werden, das Bild des Absenders ermittelt werden. Hierbei werden die Sprachdaten innerhalb eines Videos z.B. mit Sprachproben/Sprachmodellen aus Nachrichten verglichen, die der gleiche Absender abgegeben hat. Das Verfahren kann auf einem Standardprozessor mit entsprechender Software ablaufen.

In einer alternativen Ausführungsform wird die Häufigkeit des Auftretens von Bildbereichen in Nachrichten mit der gleichen Absenderadresse bestimmt. Hier kann dann z.B. Mailboxübergreifend gearbeitet werden, so dass die Person, die am häufigsten auftaucht, als der Absender bestimmt werden.

Abschließend erfolgt eine Modifikation der Bild- und/oder Videodaten der empfangenen Nachrichten durch Hervorhebung oder Animation des absenderrelevanten Bildbereichs. Das Hervorheben kann durch unterschiedliche Farben und Helligkeit und Größen erreicht werden. Auch kann eine Animation in einer 2D bzw. 3D Engine, die ebenfalls eine Software mit mind. einem Prozessor sein kann, erfolgen, wobei ein Bestimmen des absenderrelevanten Bildbereichs durchgeführt wird, um in diesem Bereich ein digitales grafisches Modell eines Sprechers zu erzeugen, das den Inhalt der Nachricht durch Animation von Mundbereichen wiedergibt.

In einer bevorzugten Ausführungsform können die Hervorhebungen wieder rückgängig gemacht werden durch Informationen Über Overlays oder durch eine Bereitstellung einer Sicherungskopie. Auch ist es möglich, dass Bereiche die verändert wurden, gesichert werden und zurückkopierbar sind.

Weiterhin ist eine Einheit mit einer Schnittstelle vorhanden (Prozessor) zur Speicherung des identifizierten absenderrelevanten 2D-Bildbereiches in Zusammenhang mit der Absenderadresse und Parameter, die die Perspektive des Absenderabbildes charakterisieren. Hierbei werden durch bekannte Bilderkennungsverfahren die Perspektive und die Körperstellung des Absenders bestimmt. Weiterhin ist eine Schnittstelle zur Übergabe des absenderrelevanten 2D-Bildbereiches und weiterer absenderrelevanter Bildbereiche aus vergangenen Nachrichten aus dem Speichersystem an ein Modul zur Generierung von 3D-Bilddaten bekannt.

Ferner sind Mittel zur Ermittlung der Perspektive/Ausrichtung des 2D-Abbilds anhand von abgebildeten Körperproportionen bekannt. Um ein 3D-Modell zu generieren bedarf es Mittel zur Suche eines zweiten 2D-Abbildes für den 3D-Eindruck. Hierbei wird auf eine notwendige zweite Ausrichtung durch Auswertung der Verhältnisse von maschinell auswertbaren Körperproportionen und/oder Änderungen der Position vor dem Hintergrund geachtet. Auch diese sind wiederum durch Parameter gekennzeichnet, welche eine andere Perspektive in der gleichen horizontalen Ebene beschreiben.

Weiterhin werden Mittel zur Generierung mindestens eines 3D-Abbildes des Nachrichtensprechers durch Ergänzung des Original 2D-Bildes mit einem aus diesem Bild kopierten zweiten Bild eingesetzt, in welchem das Absenderabbild ausgeschnitten und durch ein Bild aus einer anderen Perspektive ersetzt wird.

Wobei die Mittel zur Suche des zweiten Abbilds so ausgebildet sind, das bei der Suche eines zweiten 2D-Abbildes zuerst in der aktuellen Nachricht nach Bildern (z.B. einer Videonachricht als Folge von Bildern) aus einer anderen Perspektive vorzugsweise unter Anwendung von Gesichtserkennungsverfahren bei Anwesenheit mehrerer Personen gesucht wird.

Sind in der aktuellen Nachricht keine weiteren verwertbaren Bilder aus einer anderen Perspektive vorhanden, so erfolgt die Suche im Speichersystem vorzugsweise im Archivspeicher des Nachrichtensystems. Dies kann auch z.B. als Batch-Routine in der Nacht erfolgen, so dass bereits eine Vielzahl von Informationen vorliegen, bevor sie angefragt werden. Es erfolgt dabei vorzugsweise eine Prüfung der Proportionen von Merkmalen des Absenderabbildes der zusätzlich gefundenen Bilder aus einer anderen Perspektive auf Einhaltung vorgegebener Grenzwerte. Diese Grenzwerte können durch die Position, die Farben, die Auflösung, die Qualität des Bildes bestimmt sein. Andere Grenzwerte beschreiben eine horizontale Aufnahmeebene (Aufnahmewinkel in der Vertikalen) und eine vertikale Aufnahmeebene (Aufnahmewinkel in der Horizontalen).

Beschrieben wurde ein internetbasiertes Mailboxsystem bestehend aus personengebundenen Nachrichtenspeichern, welches zusätzlich mit mindestens einem Modul zur Speicherung von Absenderadressdaten und damit verbundenen Bilddaten von Nachrichtenabsendern, zur Sammlung dieser Bilddaten und zur Generierung von 3D-Bilddaten der Absender aus 2D-Bilddaten ausgestattet ist, um dann den Benutzer in den Bilddaten hervorzuheben.

Das Verfahren zur Hervorhebung von Nachrichtenabsendern oder von Hintergrundbereichen in Bild- oder Videonachrichten ist dadurch gekennzeichnet, dass

■ Nachrichten beiliegende Bilder oder Videoinformationen als Folge von Bildern gemeinsam mit den Absenderdaten gespeichert werden,
■ in diesen Bildern Bereiche identifiziert bzw. detektiert werden, welche Gesichter und/oder Personen darstellen,
■ diese Bereiche mit mindestens einem Referenzbild des Absenders der betreffenden Nachricht aus dem Speichermodul zum Zwecke der Identifizierung eines Bildbereiches je Bild als absenderrelevant verglichen werden,

■ Wird ein Bildbereich als absenderrelevant identifiziert:

○ Speicherung des identifizierten absenderrelevanten Bildbereiches in Zusammenhang mit den Adressdaten des Absenders,

○ Übergabe des absenderrelevanten Bildbereiches und weiterer absenderrelevanter Bildbereiche aus vergangenen Nachrichten aus dem o.g. Speicher an das Modul zur Generierung von 3D-Bilddaten

○ Generierung des bzw. Adaption eines im o.g. Speicher vorhandenen 3D-Modells des Absenders durch Ablage des ermittelten absenderrelevanten Bildbereiches im o.g. Speicher des Mailboxsystems.

○ Ablage von Informationen, die verschiedene Perspektiven/Ausrichtung des Modells des Absenders kennzeichnen im o.g. Speicher des Mailboxsystems

○ Suche eines zweiten 2D-Abbildes zum empfangenen Abbild im Rahmen der für den 3D-Eindruck notwendigen zweiten Ausrichtung durch Auswertung der Verhältnisse von Körperproportionen durch Suche nach einem Abbild des Absenders, das durch Parameter gekennzeichnet ist, welche eine andere Perspektive in der gleichen horizontalen Ebene beschreiben.

■ Dabei wird zuerst in der aktuellen Nachricht (z.B. Videomail) nach Bildern aus einer anderen Perspektive ggf. unter Anwendung von Gesichtserkennungsverfahren bei Anwesenheit mehrerer Personen gesucht

■ Sind in der aktuellen Nachricht keine weiteren verwertbaren Bilder aus einer anderen Perspektive vorhanden, so erfolgt die Suche im Archivspeicher des Mailsystems

■ Dabei Prüfung der Proportionen von Merkmalen des Absenderabbildes der zusätzlich gefundenen Bilder aus einer anderen Perspektive auf Einhaltung vorgegebener Grenzwerte, die die horizontale Aufnahmeebene (Aufnahmewinkel in der Vertikalen) und die die vertikale Aufnahmeebene (Aufnahmewinkel in der Horizontalen) beschreiben

○ Größen- oder Farbadaption des gefundenen und einzufügenden Bildes

○ Generierung mindestens eines 3D-Abbildes des Nachrichtensprechers durch Ergänzung des Original 2D-Bildes mit einem aus diesem Bild kopierten zweiten Bildes, in welchem das Absenderabbild ausgeschnitten und durch dessen Abbild aus einer anderen Perspektive ersetzt wurde.

○ Modifizierung der Bildinformation der empfangenen Nachricht und Hervorhebung des Nachrichtensprechers durch Einfügung von mindestens einem Teil des 3D-Modells in den ermittelten Perspektiven an Stelle der absenderrelevanten Bildbereiche des zweiten Bildes.

Ein weiterer Aspekt ist ein internetbasiertes Mailboxsystem bestehend aus personengebundenen Nachrichtenspeichern, welches zusätzlich mit mindestens einem Modul zur Speicherung von Absenderadressdaten und damit verbundenen Bilddaten von Nachrichtenabsendern, zur Sammlung dieser Bilddaten und zur Generierung von 3D-Bilddaten der Absender aus 2D-Bilddaten ausgestattet ist.

Beschrieben wurde ein internetbasiertes Mailboxsystem zur Speicherung und Übermittlung von Bild- oder Videonachrichten, bei dem die Sprecher der Nachrichten in besonderer Weise hervorgehoben werden, welches aus personengebundenen Nachrichtenspeichern, zusätzlich mindestens einem Modul zur Speicherung von Absenderadressdaten und damit verbundenen Bilddaten von Nachrichtenabsendern, zur Sammlung dieser Bilddaten und zur Generierung von 3D-Bilddaten der Absender aus 2D-Bilddaten und ausgestattet ist.

Zusätzlich kann unter Auswertung von ortsbezogenen Informationen des Absenders der Hintergrund des Sprechers ortabhängig gestaltet werden.

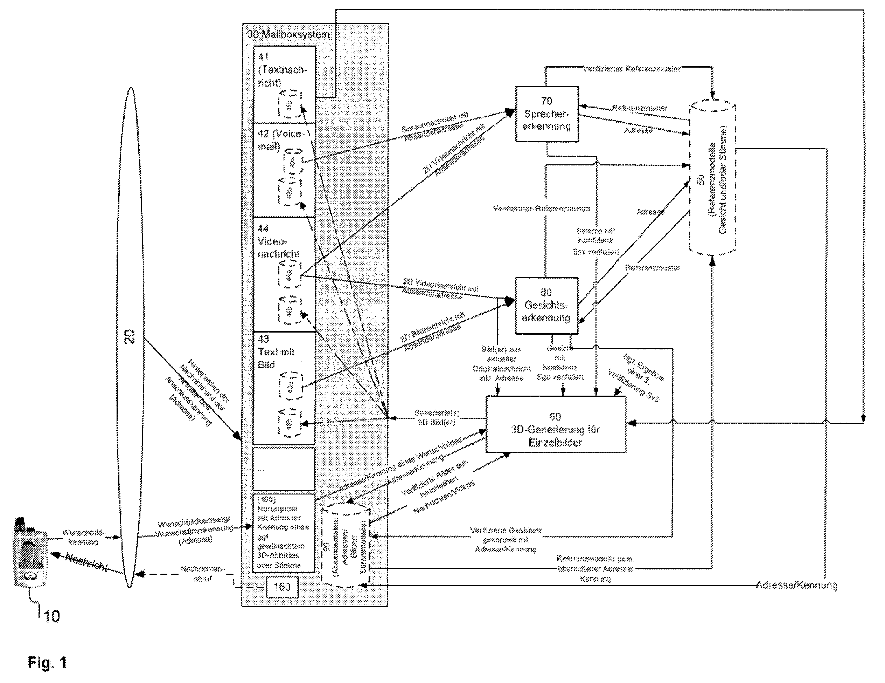

Das in Fig. 1 abgebildete Mailboxsystem 30, die 3D-Generierung 60, die Sprechererkennung 70, die Gesichtserkennung 80 können sich auch lokal vollständig oder in Teilen auf dem Endgerät befinden. In dem Fall, dass das Mailboxsytem inkl. 90 sich auf dem Endgerät befindet, stehen in 90 ggf. nur Absenderdaten zu Verfügung, mit denen der Nutzer des Endgerätes Kontakt hatte.

In einem netzbasierten Mailboxsystem 30 stehen unter Umständen auch Absenderdaten (z.B. Bilder, Videos, Adressdaten) aus Nachrichten zur Verfügung, die an andere Empfänger versandt wurden.

Das 3D-Modell eines Sprechers besteht aus einer Vielzahl von 2D-Abbildern, die gemeinsam mit Daten gespeichert werden, die die Perspektive/Ausrichtung eines einzelnen 2D-Abbildes beschreiben.

Der Vorteil der oben beschriebenen Verfahrensweisen besteht darin, dass in Bild-/Videonachrichten mit zweidimensionalen Bildinformationen (Bilder, Videos) des Absenders und Sprechers der Sprecher in besonderer Weise hervorgehoben wird, so dass der Empfänger auch bei mehrdeutigen Hintergrundverhältnisse (z.B. mehrere andere Personen im Bild) eindeutig den Sprecher der Nachricht identifizieren kann. Zusätzlich können Nachrichten, die im Original keine bildlichen Informationen enthalten, durch ergänzend generierte Bild-/Videoinformationen unter Hervorhebung des fokussierten Sprechers oder des Hintergrundes aufgewertet werden.

Wird nur ein identifiziertes Objekt innerhalb der 2D-Nachricht in ein 3D-Objekt umgewandelt, so ergibt sich dadurch der Vorteil einer zusätzlichen Hervorhebung des fokussierten Objektes vor einem 2D-Hintergrund bzw. in einer 2D-Umgebung.

Figuren Beschreibung

Im Folgenden werden die Figuren im Detail beschrieben

Fig. 1 zeigt einen schematischen Aufbau des Nachrichten/Mailbox-Systems mit unterschiedlichen Mailboxen und mobilen Endgeräten.

Fig. 2a-3b zeigen das schematische Verfahren zur Bestimmung von Bildern für eine 3D Darstellung.

Detaillierte Beschreibung:

Eine echte 3D-Darstellung realer Sprecher innerhalb der Bild- und oder Videodaten beruht für das im folgenden beschriebene System auf der gleichzeitigen oder quasi-gleichzeitigen Ausgabe von zwei 2D-Bildern von Nachrichtensprechern, wobei ein Bild für das linke und das zweite Bild für das rechte Auge bestimmt ist.

Gelöst wird die Aufgabenstellung dadurch, dass

d) zur 3D-Darstellung eines Sprechers aktueller 2D-Bildnachrichten vergangene Bild-und/oder Video-Nachrichten eines gleichen Sprechers im Mailbox-System unter Auswertung der Absenderinformationen gesucht werden, diese aus den Bildern extrahiert und in ihrer Größe an eine einheitliche Größe der Sprecherdarstellung angepasst werden und verschiedene Perspektiven (Links- und Rechtsbilder) der 2D-Einzelaufnahmen des Sprechers unter Anpassung von Helligkeits- und/oder Farbunterschieden zu einem 3D-Abbild verarbeitet werden.

e) zur 3D-Darstellung eines Sprechers aktueller 2D-Videonachrichten aus den Einzelbildern einer Videonachricht und/oder zusätzlich aus vergangenen Video-Bildnachrichten des gleichen Sprechers (unter Auswertung der Absenderinformationen) die Sprecherabbildungen extrahiert, in ihrer Größe an eine einheitliche Größe der Sprecherdarstellung angepasst werden und in der gleichen Videoaufnahme, vergangenen Videoaufnahmen und/oder Bildern des Sprechers vorhandene verschiedene Perspektiven der Aufnahmen des Sprechers unter Anpassung von Helligkeits- und/oder Farbunterschieden zu einem 3D-Abbild des Sprechers verarbeitet werden.

f) zur 3D-Darstellung eines Sprechers aktueller Text- und/oder Sprachnachrichten, die Absenderinformationen der Nachrichten (z.B. Email, Voicemail, ...) ausgewertet und im Mailbox-System nach 2D-Bild- und/oder 2D-Videonachrichten und/oder bereits erstellten 3D-Abbildern dieses Sprechers gesucht wird und diese Informationen (falls nicht schon geschehen und abgespeichert) aus den Nachrichten extrahiert, in ihrer Größe an eine einheitliche Größe der Sprecherdarstellung angepasst werden und verschiedene Perspektiven der Aufnahmen des Sprechers unter Anpassung von Helligkeits- und/oder Farbunterschieden zu einem ggf. aktualisierten 3D-Abbild verarbeitet werden.

g) zur 3D-Darstellung eines Sprechers aktueller Nachrichten den realen 2D-Sprecher von Bild- und/oder Video-Nachrichten durch ein beliebiges, ggf. durch den Empfänger voreinstellbares vorhandenes 3D-Abbild eines anderen Sprechers zu ersetzen.

h) zur 3D-Darstellung eines Sprechers aktueller Text- und/oder Sprachnachrichten mindestens ein beliebiges, ggf. durch den Empfänger voreinstellbares vorhandenes 3D-Abbild mindestens eines anderen Sprechers oder einer anderen Kunstfigur (z.B. Avatar) einzusetzen.

Um Bilder bestimmten Einheiten (z.B. Personen) zuordnen zu können, werden diese gemeinsam mit Adressen/ Absenderkennungen (wie z.B. Home Location Register (HLR), Calling Line Identification (CLI), IP-Adresse, Email-Adr., persönlichen Kennungen, ...) oder ähnlichen Adressinformationen gespeichert, wie dies z.B. für Video-Nachrichten und folglich den dort ggf. enthaltenen Bildinformationen der Fall ist.

Ggf. müssen verschiedene Adressen/Kennungen einer Person untereinander in eine eindeutige Kennung umgesetzt werden.

Auf Bildern-/Videos (43a, 44a) der Nachrichten können außer dem Sprecher auch andere Personen sichtbar sein, so dass es zielführend ist, das Gesicht des Nachrichtensprechers zu verifizieren. Deshalb werden auf Darstellungen der Nachrichten auf denen mehrere Gesichter erkannt werden, die Darstellungen dieser Gesichter extrahiert und im Vergleich zu bekannten Gesichtern des an Hand seiner Adresse identifizierten Nachrichtensprechers in der Glesichtserkennung (80) nacheinander oder in Parallelprozessen verifiziert. Die Absenderadresse wird dazu genutzt, um die für die Verifizierung notwendigen Referenzgesichter/Referenzmodelle/Referenzmuster zu ermitteln.

Im Weiteren wird dann nur für den Bild-/Video-Gesichtsbereich ein 3D-Abbild generiert, dessen Verifizierung im Vergleich zum über die Adresse ermittelten Referenzmodell, aus 50 einen Mindestwert an Übereinstimmung (Konfidenz) mit dem Referenzmodell des Absenders ergibt, wobei festgelegt werden kann, ob zur erfolgreichen Verifizierung ein festgelegter Konfidenzgrenzwert (vorzugsweise um 70-80%) über- oder unterschritten werden muss. D.h. die Generierung eines 3D-Bildes bzw. von 3D-Bildfolgen (60) wird nur in dem Fall vollzogen, wenn das Gesicht in der Bild-/Videonachricht erfolgreich verifiziert wurde (siehe Fig. 1). Bilder ohne detektierte Gesichter bzw. ohne mindestens ein erfolgreich verifiziertes Gesicht des Absenders werden im Rahmen dieses Prozesses nicht verändert.

Zur zusätzlichen Absicherung der Verifizierung des Sprechers einer Videonachricht aus der sowohl Bilder des Sprechers (Video = Folge von Einzelbildern und vorzugsweise Tonsignalen) als auch dessen Stimmsequenzen extrahiert werden können, kann die Verifizierung des Gesichts des Absenders (gem. Absenderadresse) mit der Verifizierung der Stimme des Sprechers kombiniert werden, hierzu wird nun zusätzlich über die Gesichtserkennung an Hand implementierter Vergleichsmodelle festgestellt, ob ein Gesicht mit sich bewegenden Lippen dem des Absenders entspricht. Ist dies der Fall, wird das Gesicht des Sprechers anhand von mindestens einem Referenzmodell aus 50 und/oder 90 des mit Hilfe der Absenderadresse identifizierten Sprechers verifiziert

Das Verifizierungsergebnis in Form eines Zuverlässigkeitsscores wird gespeichert.

Ebenfalls verifiziert wird die aufgezeichnete Stimme des Sprechers anhand von mindestens einem Referenzmodell aus 50 und/oder 90 des mit Hilfe der Absenderadresse identifizierten Sprechers.

Das Ergebnis der Sprecherverifizierung in Form eines Zuverlässigkeitsscores wird ebenfalls gespeichert.

Die Reihenfolge der beiden Verifizierungen ist für die kombinierte Verarbeitung nicht von Belang.

Kombiniert mit der Gesichtserkennung oder umgekehrt kann nun zusätzlich die Stimme des lokalisierten Sprechers mithilfe bekannter Verfahren der Sprecherverifizierung/ Sprechererkennung ausgewertet werden.

Bei der Kombination von Ergebnissen der Sprecherverifizierung, der Gesichtserkennung und ggf. der Verifizierung anderer Medien können u.U. widersprüchliche Verifizierungsergebnisse mit unterschiedlichen Zuverlässigkeitswerten entstehen. So ist es unter der beispielhaften Voraussetzung eines einheitlichen Ergebnisbereiches von 0..100 für die Sprecherverifizierung (SV) und Gesichtserkennung (GE) und der Annahme, dass Werte von 0..80 eine Ablehnung und Werte von 81..100 die Akzeptanz der Signale bedeuten, durchaus möglich, dass z.B. die SV einen Wert von 79 und die GE einen Wert von 81 liefert. Noch mehrdeutiger wird die Entscheidung zur Generierung des Entscheidungssignals, wenn neben der Auswertung von mehr als zwei Mediensignalen bei den Ergebniswerten von unterschiedlichen Zuverlässigkeitsgrenzwerten für die einzelnen Ergebnisse ausgegangen werden muss.

Dieses Problem kann z.B. mit einer Normalisierung der Einzelwerte und einer gewichteten Addition der normierten Werte zur Bildung des zu vergleichenden Entscheidungswertes gelöst werden, z.B.:

$$Ew = Wsv \cdot \frac{Ssv - Ssv_{min}}{Ssv_{max} - Ssv_{min}} + Wge \cdot \frac{Sge - Sge_{min}}{Sge_{max} - Sge_{min}} + Wv3 \cdot \frac{Sv3 - Sv3_{min}}{Sv3_{max} - Sv3_{min}} + \ldots + Wvn \cdot \frac{Svn - Svn_{min}}{Svn_{max} - Svn_{min}}$$

wobei

Ew - Normalisierter Entscheidungswert

Ssv - Zuverlässigkeitsscore der Sprecherverifizierung

$Ssv_{min}$ - Minimalwert des Zuverlässigkeitsscores der Sprecherverifizierung

$Ssv_{max}$ - Maximalwert des Zuverlässigkeitsscores der Sprecherverifizierung

Wsv - Wichtungsfaktor für den normalisierten Zuverlässigkeitsscore der Sprecherverifizierung

Sge - Zuverlässigkeitsscore der Gesichtserkennung

$Sge_{min}$ - Minimalwert des Zuverlässigkeitsscores der Gesichtserkennung

$Sge_{max}$ - Maximalwert des Zuverlässigkeitsscores der Gesichtserkennung

Wv3 - Wichtungsfaktor für den normalisierten Zuverlässigkeitsscore der Gesichtserkennung,

Wv3 - Wichtungsfaktor für den normalisierten Zuverlässigkeitsscore der möglicherweise 3. Verifizierung (z.B. Gestikerkennung)

Sv3 - Zuverlässigkeitsscore der Gesichtserkennung

$Sv3_{min}$ - Minimalwert des Zuverlässigkeitsscores der 3. Verifizierung (z.B. Gestikerkennung)

$Sv3_{max}$ - Maximalwert des Zuverlässigkeitsscores der 3. Verifizierung (z.B. Gestikerkennung)

Wv3 - Wichtungsfaktor für den normalisierten Zuverlässigkeitsscore der 3. Verifizierung (z.B. Gestikerkennung)

Svn - Zuverlässigkeitsscore des n-ten verifizierten Mediums

$Svn_{min}$ - Minimalwert des Zuverlässigkeitsscores des n-ten verifizierten Mediums

$Svn_{max}$ - Maximalwert des Zuverlässigkeitsscores des n-ten verifizierten Mediums

Wvn - Wichtungsfaktor für den normalisierten Zuverlässigkeitsscore des n-ten verifizierten Mediums

Im einfachsten Fall wäre hier bei gleichen normalisierten Einzelgrenzwerten und n=3 Wsv=Wge=Wv3=1/n=1/3

Bei unterschiedlichen normalisierten Einzelgrenzwerten $Sg_n$ werden die normalisierten Zuverlässigkeitsscores

$$S_n = \frac{Svn - Svn_{min}}{Svn_{max} - Svn_{min}}$$

selbst auf einen gemeinsamen gleichen normalisierten Grenzwert (GNG) adaptiert, so dass wieder mit gleichen Wichtungsfaktoren gearbeitet werden kann.

Bei dieser Art der Normalisierung $Sn_{min} = 0$ und $Sn_{max} = 1$ kann dazu die Auflösung des Polynoms 2. Ordnung

$$GNG = a_n Sg_n^2 + (1 - a_n) Sg_n$$

zur Berechnung des Wertes **a_n** anhand der bekannten Werte für GNG und $Sg_n$ (Normalisierter Score-Grenzwert der n-ten Verifizierung) dienen.

Als GNG kann z.B. ein Mittelwert der einzelnen, unterschiedlichen normalisierten Grenzwerte angenommen werden.

Damit berechnet sich dann der Entscheidungswert:

$$Ew = W_{V1} \cdot (a_1 Sg_1^2 + (1 - a_1) Sg_1) + W_{V2} \cdot (a_2 Sg_2^2 + (1 - a_2) Sg_2) + W_{V3} \cdot (a_3 Sg_3^2 + (1 - a_3) Sg_3) + \ldots + W_{Vn} \cdot (a_n Sg_n^2 + (1 - a_n) Sg_n)$$

Die Wichtungsfaktoren können nun bei gleicher Bedeutung der verschiedenen Verifizierungsverfahren wieder gleich auf 1/n gesetzt werden.

Über- oder unterschreitet nun Ew einen festgesetzten Grenzwert für GNG, so werden nun die Steuerbefehle zur Hervorhebung (z.B. durch 3D-Generierung eines Sprecherabbildes) in 60 weitergeleitet oder abgeblockt. Ähnliches kann geschehen, wenn nur Aktivierungs- bzw. Deaktivierungssignale weitergeleitet werden sollen.

In den Archivspeicher 90 für Absenderbilder/-videos werden aus der empfangenen Nachricht nur die den entsprechenden Adressen zugeordneten Absenderbilder abgelegt, die erfolgreich verifiziert wurden, so dass folgend bei Bedarf zur Generierung des 3D-Abbildes (siehe a, b, c) auch nur die Abbilder/Videos verwendet werden, deren vorherige Verifizierungen im Vergleich zum über die Adresse ermittelten Referenzmodell aus 50 oder 90 einen Mindestwert an Übereinstimmung (Konfidenz) mit dem Referenzmodell ergeben hatten.

1) Bei einer 2D-Aufnahme einer Videonachricht eines Einzelsprechers wird im vorgesehenen Verfahren davon ausgegangen, dass damit für jedes Bild der Videosequenz ein von für eine 3D-Darstellung notwendiges Bild für das rechte (Rechtsbild) oder linke Auge (Linksbild) schon vorhanden ist.

Ein Video wird hier als eine Sequenz von Einzelbildern aufgefasst.

Zur vollständigen 3D-Darstellung ist also ein zweites Bild einer Person bzw. deren Gesicht für das jeweils andere Auge zu generieren. Zur beispielhaften, vereinfachten Beschreibung des 3D-Generierungs-verfahrens wird im Folgenden davon ausgegangen, dass das vorhandene Bild als vorhandenes rechtes Bild (Rechtsbild) gewertet wird. Das linke Bild (Linksbild) muss also im Weiteren noch für jedes Bild der Videosequenz generiert werden.

Bevor jedoch das für die 3D-Generierung notwendige Linksbild erstellt wird, ist es sinnvoll zu prüfen, ob der auf mind. einem Bild der Videosequenz abgebildete Sprecher oder mindestens einer der abgebildeten Sprecher einem ggf. früher erhaltenen und in 50 oder 90 gespeicherten, über die Absenderadresse identifizierbaren Abbild entspricht.

Bei erfolgreicher Verifizierung des Einzelsprechers, werden Umrisse und Koordinaten der Position des dem Absender entsprechenden Abbildes gespeichert, und das Rechtsbild wird in einem ersten Schritt vollständig in das Linksbild kopiert, was allein noch nicht zu einem 3D-Effekt führt. In den folgenden Schritten wird das Abbild des Sprechers aus dem nun neuen Linksbild gem. den gespeicherten Umrissen und den Koordinaten der Position herausgeschnitten und durch ein in der Größe angepasstes Abbild des gleichen Sprechers der Nachricht aus einer weiter links liegenden Perspektive ersetzt. Verfahren zum automatischen Bestimmen von Umrissen, Herausschneiden, Vergrößern, Verkleinern und Einfügen von Objekten in Bilder dürfen dazu als bekannt vorausgesetzt werden.

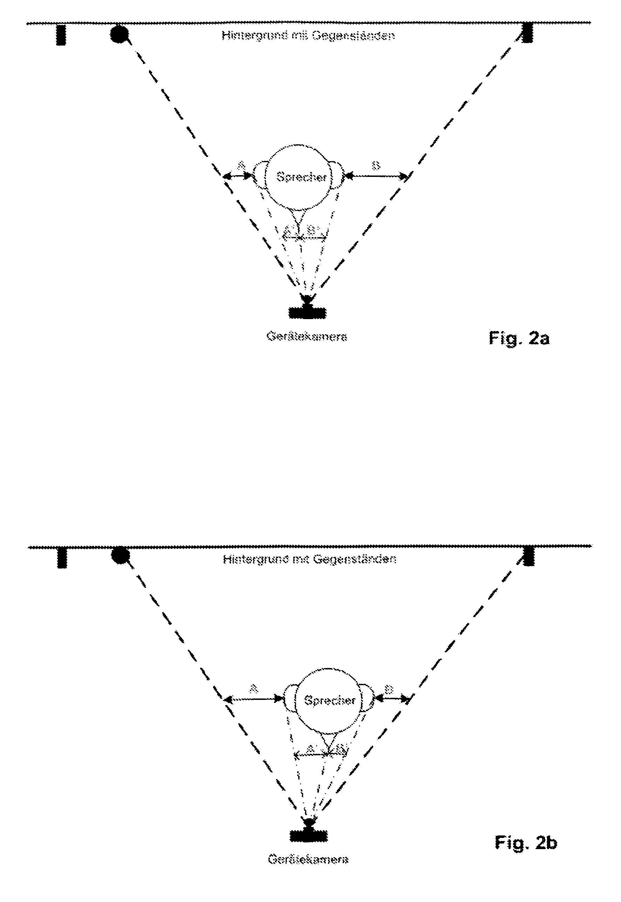

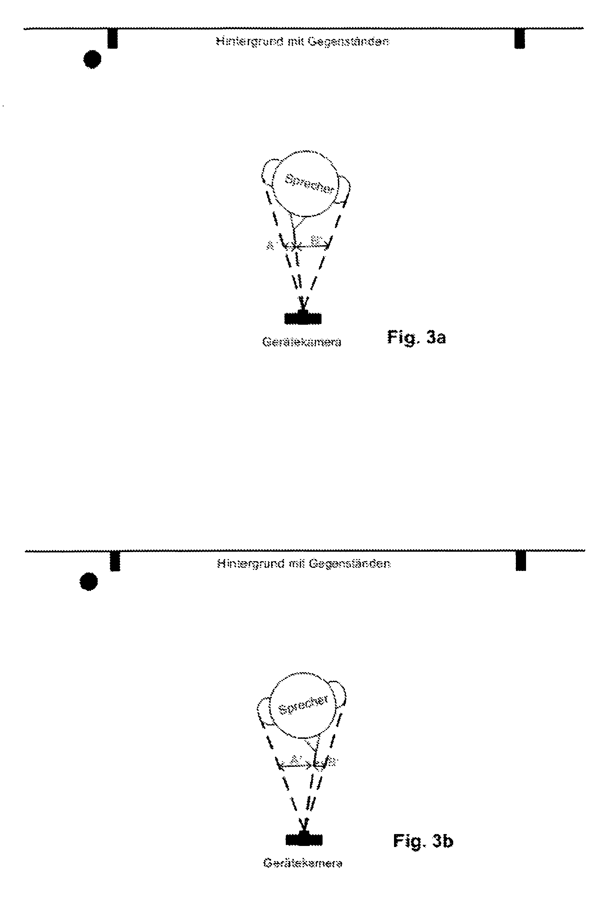

Das Abbild (Ausschnitt) des gleichen Sprechers der Nachricht aus einer weiter links liegenden Perspektive wird nun für jedes Einzelbild der Videosequenz aus anderen Bildern der Videosequenz in denen gem. Fig. 2b oder Fig. 3b gewonnen, aus denen gem. der Zeichnung anhand der verkürzten Abstände B und/oder B' und verlängerten Abstände A und/oder A' hervorgeht, dass der Aufnahmewinkel sich weiter links von der Aufnahmeposition des ursprünglichen Rechtsbildes befindet. Dabei kann gem. der im Abbild dargestellten Gesichtsgröße ein möglicher Maximalwert und/oder Minimalwert für das Verhältnis zwischen B, B', A, A' aus Fig.2a und jeweils B, B', A, A' aus Fig. 2b bzw. zwischen B, A, aus Fig.3a und jeweils B, A, aus Fig. 3b eingestellt werden, damit die virtuelle 3D-Stereobasis sind nicht wesentlich vom durchschnittlichen Augenabstand unterscheidet.

Wird für einzelne Rechtsbilder aus der Videosequenz kein weiteres Linksbild, d.h. kein weiteres Bild aus einer weiter links liegenden Position gefunden, so kann in diesen Grenzfällen auch zum nun vorhandenen (das Rechtsbild war in das Linksbild kopiert worden) Linksbild ein passendes Rechtbild aus einem anderen Bild der Videosequenz unter Berücksichtigung der Relationen zwischen B, B', A, A' aus Fig.2b und jeweils B, B', A, A' aus Fig. 2a bzw. zwischen B, A, aus Fig.3b und jeweils B, A, aus Fig. 3a ergänzt werden. Hier sollten dann bei der Auswahl ebenfalls die o.g. Minimal- und/oder Maximalwerte eingehalten werden.

Liegt die durch die Minimal- und/oder Maximalwerte festgelegte virtuelle Stereobasis nicht innerhalb bestimmter Grenzen, so kann dies zu einem Pulsieren des 3D-Effektes führen.

Fehlende zu ergänzende Links- oder Rechtsbilder des Absenders können zusätzlich aus den in 90 gespeicherten und verifizierten Bildern/Videos historischer Nachrichten des gleichen Absenders gewonnen werden.

2) Liegt aus der empfangenen Nachricht nur ein einzelnes (z.B. als Rechtsbild gewertetes) Abbild des möglichen Sprechers (Foto) vor, so wird dieses Abbild gem. der oben beschriebenen Verfahren verifiziert und deren Ergebnisse ggf. wie oben beschrieben kombiniert. Nach erfolgreicher Verifizierung werden auch hier Umrisse und Koordinaten der Position des dem Absender entsprechenden Abbildes gespeichert, und das Rechtsbild wird in einem ersten Schritt vollständig in das noch für das 3D-Format zu generierende Linksbild kopiert, und das Abbild des Sprechers aus dem nun neuen Linksbild wird gem. den gespeicherten Umrissen und den Koordinaten der Position herausgeschnitten und durch ein in der Größe angepasstes Abbild des gleichen Sprechers der Nachricht aus einer weiter links liegenden Perspektive ersetzt.

Das Abbild (Ausschnitt) des gleichen Sprechers der Nachricht aus einer weiter links liegenden Perspektive wird nun aus Bildern und/oder Videos gewonnen, die aus früheren Nachrichten stammen und in 90 gemeinsam mit Referenz auf die Absenderadresse und Informationen, die die Recht-/Links-Proportionen des Abbildes des Absenders repräsentieren (z.B. Quotient aus A' und B'), abgelegt wurden. Zur Überwachung der Recht-/Links-Proportionen können die Verhältnisse der Abstände verschiedener markanter Bereiche des Gesichts, wie z.B. Augen, Mund, Ohren, Nase, Kinn usw. ausgewählt, markiert und nach der Berechnung der proportionsbestimmenden Merkmale werden diese mit Bezug auf das jeweilige Bild in 90 archiviert.

Bei der Auswahl des zu ergänzenden Bildes wird darauf geachtet, dass gem. der im Abbild dargestellten Gesichtsgröße ein möglicher Maximalwert und/oder Minimalwert für das Verhältnis zwischen B, B', A, A' aus Fig.2a und jeweils B, B', A, A' aus Fig. 2b bzw. zwischen B, A, aus Fig.3a und jeweils B, A, aus Fig. 3b nicht über bzw. unterschritten wird, damit auch hier die virtuelle 3D-Stereobasis sind nicht wesentlich vom durchschnittlichen Augenabstand unterscheidet.

In der beschriebenen Methodik kann natürlich auch das rechte Bild als vorhandenes rechtes Bild in das linke Bild kopiert werden, wobei letzteres dann wie oben für das linke Bild beschrieben modifiziert wird.

Die aus mindestens zwei 2D-Abbildern mit verschiedenen Perspektiven generierten 3D-Abbilder des Sprechers werden in beiden Fällen (Video und Foto) über Normalisierungsverfahren wieder in ihrer Größe an die Sprechergröße in der 2D-Nachricht angepasst und entsprechend der Orientierung des Sprechers in der Originalnachricht in dessen digitale bildliche bzw. Videodarstellung in der nun modifizierten Originalnachricht (43b, 44b) eingefügt, wobei unter Einfügung grundsätzlich auch das Hinzufügen mindestens eines zweiten Bildes aus einer weiteren Perspektive zu verstehen ist.

Die Orientierung des Sprechers in der 2D-Nachricht wird über die Auswertung der Position wesentlicher Merkmale von Gesicht und/oder Körper, wie z.B. die Lage von Haaransatz, Augen, Nase, Lippen und/oder Ohren im Verhältnis zum Abstand von der Kopfbegrenzung ermittelt, wobei ein nahezu symmetrischer Gesichtsaufbau bei direkter Ausrichtung Gesichts auf mindestens eine aufnehmende Kamera vorausgesetzt wird.

Da die Orientierung des Sprechers in der 3D-Darstellung der ursprünglichen Orientierung in der 2D-Darstellung dynamisch angepasst wird, kann auch die Darstellung von Lippenbewegungen für die Einzelbilder einer Videonachricht, die dann jeweils die gleiche Orientierung aufweisen, unter Akzeptanz geringer Qualitätseinbußen direkt übernommen werden.

Beim computergestützten, automatischen Einfügen von bildlichen 3D-Darstellungen einer Person in einen Bildausschnitt, welcher ursprünglich durch eine 2D-Darstellung der gleichen Person belegt war, besteht eine geringe Gefahr, dass an den Rändern der eingefügten bildlichen Darstellung dieser Person Bereiche entstehen, welche weder durch die neue bildliche Darstellung der Person noch durch den ursprünglichen Originalhintergrund abgedeckt werden. Hier kann eine leichte Vergrößerung der Einfügung und ggf. des ersten Originalbildes im berechneten Ausschnitt um einen festgelegten Wert oder eine dynamische Vergrößerung je nach berechneter Fehlabdeckung durchgeführt werden, bis die Grenze der größte Fehlabdeckungsbereich abgedeckt ist. Umgekehrt ist ebenfalls eine geringfügige Komprimierung des Hintergrundes zum eingefügten Abbild möglich, wie z.B. in DE69628662T2 beschrieben.

Reine Textnachrichten (41) verfügen im allg. im Original nicht über zu ersetzende oder verifizierbare Bild- oder Videoaufzeichnungen. Um diese ergänzend mit einem 3D-Abbild oder einer Folge von 3D-Abbildern (Video) des Absenders auszustatten, die bei Anzeige/Wiedergabe der Nachricht abgespielt werden, kann hier direkt die Adresse des Absenders benutzt werden, um die für die Generierung der eines ergänzenden 3D-Abbildes (41b) notwendigen verifizierten Bilder aus 90 zu ermitteln. Im Datenbereich 90 werden dafür alle bereits erhaltenen und verifizierten Abbilder eines Absenders an seine Kennung/Adressinformation gekoppelt abgespeichert und bei Bedarf im Fall der Generierung von 3D-Abbildern für diesen Sprecher oder zum Zwecke der Verifizierung neuer Bildinformationen eines Sprechers anhand der der Originalnachricht zugeordneten Adresskennung abgerufen.

Auch Sprachnachrichten (42) verfügen im allg. im Original nicht über zu ersetzende oder verifizierbare Bild- oder Videoaufzeichnungen. Jedoch kann hier zur Verifizierung (70) des Sprechers, d.h. zur Überprüfung, ob das der Absenderadresse/Kennung der aktuellen Nachricht ggf. zugeordnete Referenzstimmmodell aus 90 und/oder 50 der Stimme des Sprechers der aktuellen Sprachnachricht entspricht. Ist dies der Fall, so wird die dem Sprecher abgesichert zugeordnete Adressinformation dazu genutzt, um dessen ggf. in 90 vorhandenen verifizierten Abbilder zur Generierung eines ergänzenden 3D-Abbildes (60) abzurufen. Dieses generierte 3D-Abbild wird nun genutzt, um einen im Abbild dem Absender gleichenden Avatar zu generieren, welcher anhand der Auswertung der phonetischen Merkmale der Sprachnachricht unter Adaption der Mundbewegungen die gesprochene Nachricht gem. bekannter Sprachsyntheseverfahren (Quelle-Filter-Modell, Formantsynthese, Akustisches Modell, Artikulatorische Synthese, Overlap Add etc.)wiedergibt.

In Fig. 1 wird schwerpunktmäßig der Prozess der Generierung von 3D Abbildern aus 2D-Bildern/Bildfolgen eines Absenders dargestellt.

Ergänzend dazu können in 90 gespeicherte Phoneme/Phonemfolgen/Silben/Wörter/Phrasen der Sprecher von Sprach- und/oder Videonachrichten genutzt werden, um gem. der übermittelten Adresskennung (hier auch als Sprecherkennung genutzt) auf Texte aus 41 das Sprachsyntheseverfahren Unit Selection anzuwenden.

Auf Grund der ermittelten Absenderadresse der Textnachricht werden nun entsprechende Sprachfragmente des analog über seine Stimme verifizierten (siehe 70) Absenders in 90 gesucht, um aus dem übermittelten Text eine Sprachnachricht zu generieren. Ein ebenfalls mithilfe der Absenderadresse aus 2D Abbildern des Absenders generierter 3D-Avatar (s.o.) kann nun über die so generierte Sprachausgabe des Textes unter Adaption der Mundbewegungen die Textnachricht akustisch wiedergeben. Auf diese Art wird aus einer einfachen Textnachricht eine Sprach- und 3D-Videonachricht generiert.

So, wie aus gesammelten Stimmfragmenten des Absenders eine Sprachausgabe von Textnachrichten mit dessen Stimme generiert werden kann, ist prinzipiell durch den Empfänger der Nachricht auch eine andere Stimme (z.B. durch Modifikation der ursprünglich ermittelten Absenderadresse, welche prinzipiell als Verweis auf die gewünschte Stimme verwendet wird, auf einen anderen Wert) für die Nachricht einstellbar, welche ergänzend mit Hilfe von in den Text eingefügten Kennzeichnungen emotionale Schwankungen der Sprachausgabe zum Ausdruck bringen kann.

Abbild und/oder Stimme des Absenders können z.B. auf Wunsch des Nachrichtenempfängers oder des Betreibers des Mailboxsystems modifiziert werden. Dazu wird die aus der empfangenen Nachricht ermittelte Absenderkennung/-adresse durch eine vom Nachrichtenempfänger einstellbare Adresse/Kennung (100) ersetzt und zur 3D-Generierung der Einzelbilder bzw. zur Generierung der Wiedergabestimme werden gem. der nun vorgegebenen Adresse/Kennung Bild- bzw. Stimmfragmente zur Generierung der 3D-Abbilder bzw. Sprachausgabe eines neuen Sprechers in 90 gesucht.

Neben der direkten Auswahl des Abbildes und/oder der Stimme während der Wiedergabe können Auswahlparameter die Modifikationen im vom Empfänger verwalteten Nutzerprofil (100) enthalten.

Hier ist ebenfalls der Speicherort für Informationen, die weitere Formen der 3D-Generierung definieren.

Im einfachsten Fall wird, wie oben beschrieben, aus einer 2D-Videonachricht des Absenders durch Auswertung von Absenderinformationen (z.B. über die übermittelte Absenderadresse) ein 3D-Video des Absenders generiert bzw. aus einem der Nachricht beiliegenden 2D-Einzelbild des Absenders wird ebenfalls durch Auswertung von Absenderinformationen (z.B. über die übermittelte Absenderadresse) ein aus zwei 2D-Bildern bestehendes 3D-Einzelbild des Absenders generiert.

Eine andere Einstellung im Nutzerprofil kann bedeuten, dass an Stelle eines empfangenen mit einer Sprachnachricht gekoppelten 2D-Einzelbildes oder einer bildlosen Sprachnachricht ein schon einmal generiertes und in 90 abgespeichertes Vorzugs-3D-Video des Absenders noch einmal mit der Sprachnachricht der aktuell empfangenen Nachricht abgespielt werden soll. Da die Lippenbewegungen des aufgezeichneten Absenders nun nicht mehr synchron zum aktuell gesprochenen Nachrichtentext sind, muss eine Anpassung der Lippenbewegungen vorgenommen werden. Aus der Generierung und Anwendung von Avataren sind Visem-Phonem-Zuordnungen bekannt, bei denen zur Sprachausgabe von geschriebenem Text virtuelle, künstliche Charaktere diesen Text unter entsprechend modellierten Lippenbewegungen ansagen. Ebenfalls bekannt sind Spracherkennungsverfahren, die aus einem gegebenen Sprachfluss nicht nur Wörter sondern ebenfalls Phonemfolgen (Lautfolgen) extrahieren können. Für jede Sprache/ jeden Dialekt existiert eine begrenzte Anzahl möglicher Phoneme und damit auch eine begrenzte Anzahl von möglichen Phonemübergängen. Im Deutschen wird dialektabhängig von ca. 40 Phonemen ausgegangen. Im gegebenen Fall werden aus der gewählten archivierten (historischen) Videonachricht die Phonemfolgen eines Absender o.a. Sprechers mithilfe des Spracherkennungssystems extrahiert und gemeinsam synchron mit den entsprechenden Mimiksequenzen als Phonem-Visem Kombinationen abgespeichert. Gleiches wird für die Speicherung von Phonem-Übergängen und den entsprechenden Visemen dazu vollzogen. Als Viseme eines Absenders o.a. ggf. auch künstlichen Sprechers können hier z.B. ganze Bildsequenzen inkl. Sprecherhintergrund als auch nur die ausgeschnittenen 3D-Gesichter oder Mundausschnitte betrachtet werden. Einzelnen Sprechern zugeordnete Visemkollektionen werden ebenfalls mit den Adressen dieser Sprecher verknüpft.

Danach wird die aktuelle, in eine Videonachricht umzuwandelnde Sprachnachricht ebenfalls nach Phonemfolgen und -übergängen analysiert. Sind alle Phonemfolgen und Übergänge mindestens einmal in der archivierten Videonachricht enthalten, so wird entsprechend den Phonemfolgen und - übergängen der aktuellen Sprachnachricht aus die entsprechende Bild-/Visemfolge synchron zur Phonemfolge der aktuellen Nachricht hinzugefügt.

Sind in einer archivierten Vorzugs-Videonachricht nicht alle Phonemfolgen und/oder -übergänge der aktuellen Nachricht enthalten, so wird unter Auswertung der Phonemfolgen und -übergänge nach weiteren archivierten Botschaften (zB. 2D, 3D Audio usw) des gleichen Absenders gesucht, die die zusätzlich benötigten Phonemfolgen und -übergänge enthalten. Aufgrund unterschiedlicher Hintergründe und Farbnuancen werden gem. obigen Beispielen aus den entsprechenden Visemfolgen z.B. nur die Gesichts- oder Kopfdarstellungen des Sprechers herausgeschnitten und unter Größen-/Farb- und/oder Randadaption in Bildsequenzfolgen der Vorzugsvideonachricht eingefügt.

Werden 3D-Abbilder anderer Personen als die der Absender in den vorgegebenen Bildbereich vor dem Originalhintergrund eingefügt, so kann, wie schon einmal beschrieben, entweder eine Vergrößerung der Einfügung um einen festgelegten größeren Wert oder wiederum eine dynamische Vergrößerung je nach berechneter Fehlabdeckung durchgeführt werden, bis die Grenze des Fehlabdeckungsbereiches erreicht ist.

So wie hier für Nachrichtensprecher beschrieben, können auch über Bilderkennungsverfahren identifizierte statische Objekte in Bild- und/oder Videonachrichten mit Kennungen versehen und in der Nachricht zu 3D-Abbildern (z.B. Gebäude als Hintergrundobjekte) modifiziert werden.

Eine zusätzliche Ergänzung bildet die Einfügung eines anderen Hintergrundes in Abhängigkeit vom festgestellten Aufenthaltsort des Absenders der Nachricht. Wird z.B. beim Hinterlassen und/oder Versenden einer Bild- oder Videonachricht über ein mobiles Endgerät unter Auswertung der Roaming-Informationen festgestellt, dass der Absender der Nachricht sich in einem bestimmten Land, Provinz oder Ort befindet, kann in Abhängigkeit von diesem Ort ein neues Hintergrundbild eingefügt werden. Dazu wird z.B. im Text-, Voice- und/oder Video-Mailboxsystem zusätzlich beim Hinterlassen einer entsprechenden Nachricht eine ortsbestimmende Information abgespeichert.

Die auf diese Art mit der hinterlassenen Nachricht gekoppelte ortsbestimmende Information kann

1. beim Hinterlassen der Nachricht von einem mobilen Endgerät bzw. einem Endgeräte, welches die Erfassung der folgenden Informationen ermöglicht die

a) Cell-ID der Cell-of-Origin UND/ODER
b) die Cell-IDs umgebender Funkzellen mit entsprechenden Signallaufzeiten zu den benachbarten Funkmasten der Basisstationen. UND/ODER
c) die aus diesen Signalen berechnete Position bzw. Positionsbereich enthalten.

Die Laufzeiten von Signalen zu umgebenden Funkmasten werden ebenfalls im sog. A-GPS-Verfahren genutzt, um die Lokalisierung per GPS-Verfahren zu unterstützen
2. beim Hinterlassen der Nachricht von einem Endgerät, welches keine ortsbestimmenden Funksignale empfängt, eine Landeskennung und/oder eine Ortvorwahl enthalten, aus welchen ggf. der Standort des Endgerätes abgeleitet werden kann.
3. beim Hinterlassen der Nachricht von einem VoIP-System mindestens eine IP-Adresse und der Zeitpunkt des Hinterlassens einer Nachricht und/oder DSLAM-Portadresseen enthalten, aus welchen ebenfalls eine Ortbestimmung abgeleitet werden kann (http://www.voip-info.de/wissen/ Artikel Allgemein 2011.php?page=3).

Die ortsbestimmende und/oder Absenderadresskennung dienen zusätzlich dazu, um der Nachricht einen ortsabhängigen bzw. absenderabhängigen Geräuschhintergrund hinzuzufügen, welcher die Einbettung des Sprechers in eine dreidimensionale Umgebung verstärkt, indem abhängig von Ort und/oder Absender verschiedenen mehrkanalig aufgezeichnete Hintergrundgeräusche der modifizierten Nachricht hinzugemischt werden. So kann ein vorgespeicherter Hintergrund in das Bild eingemischt werden, wobei bekannt verfahren zum Ersetzten eines Hintergrundes gewählt werden.

Ist der Aufnahmeort für den Absender der Nachricht von besonderer Bedeutung so kann der versandten Nachricht ein Zusatzsignal beigefügt werden, welches das Mailboxsystem veranlasst, nur aus dem Hintergrund ähnlich dem oben beschriebenen Verfahren ein 3D-Abbild zu generieren. Hierzu wird ebenfalls das 2D-Original gedoppelt und in der Kopie der Hintergrund ausgeschnitten. Dieser ausgeschnittene Hintergrund wird dann durch den gleichen Hintergrund inkl. Nebenobjekte ersetzt, der aus einer anderen Perspektive aufgenommen wurde. Ebenso möglich ist die Einfügung ortabhängiger, vorgenerierter 3D-Hintergründe. Der Sprecher würde in diesem Fall zweidimensional erscheinen.

Die Veranlassung zu Generierung des 3D-Hintergrundes kann ebenfalls durch den Empfänger über ein direktes Signal oder über eine Einstellung in den Empfängerprofilen (100) initiiert werden.

**Patentansprüche**

1.  Verfahren zur Hervorhebung ausgewählter Objekte in Bild- und/oder Videodaten, die in Nachrichten abgelegt sind, wobei die Nachrichten auf einem digitalen Nachrichtsystem abgelegt sind, in dem eine Vielzahl von personengebundenen Nachrichten auf einem Speichersystem gespeichert wird, wobei die Nachrichten mit Absenderadressen versehen sind,

    - Identifizierten (80)von Bildbereichen mit Gesichtern und/oder Personen in den digitalen Bilddaten oder Videodaten in den Nachrichten auf dem digitalen Nachrichtensystem, die die gleiche Absenderadresse aufweisen;
    - Bestimmen von absenderrelevanten Bildbereichen (90), die die Person des Absenders darstellen, aus den identifizierten Bildbereichen auf der Basis von Referenzbildern, die auf einem Speichersystem abgelegt sind, und/oder
    auf der Basis von Sprechererkennungsverfahren, Sprecherverifizierungsverfahren oder Sprecheridentifizierungsverfahren (70) unter Berücksichtigung von Sprachdaten und Bilddaten in der Nachricht, von Referenzsprachdaten
    und/oder
    von Sprachdaten in den Videodaten, die miteinander verglichen werden,
    und/oder
    durch Bestimmen der Häufigkeit des Auftretens von Bildbereichen in Nachrichten mit der gleichen Absenderadresse;
    - Modifikation der Bild- und/oder Videodaten der empfangenen Nachrichten durch Hervorhebung des absenderrelevanten Bildbereichs.

2.  Das Verfahren nach dem vorhergehenden Anspruch, wobei die Modifikation so ausgeführt wird, dass sie durch den Empfänger rückgängig gemacht werden kann, vorzugsweise indem ein Auswahldialog bereitgestellt wird.

3.  Das Verfahren nach einem oder mehreren der vorhergehenden Ansprüche, wobei die identifizierten Bildbereiche verwendet werden, um ein 3D-Modell zu erzeugen.

4.  Das Verfahren nach dem vorhergehenden Anspruch, **dadurch gekennzeichnet, dass** wenn ein Bildbereich als absenderrelevant identifiziert wird, folgende Schritte ausgeführt werden:

    - Speicherung des identifizierten absenderrelevanten 2D-Bildbereiches in Zusammenhang mit der Absenderadresse und Parameter, die die Perspektive des Absenderabbildes charakterisierenden,
    - Übergabe des absenderrelevanten 2D-Bildbereiches und weiterer absenderrelevanter Bildbereiche aus vergangenen Nachrichten aus dem Speichersystem an ein Modul zur Generierung von 3D-Bilddaten,
    - Ermittlung der Perspektive/Ausrichtung des 2D-Abbilds anhand von abgebildeten Körperproportionen,
    - Suche eines zweiten 2D-Abbildes für den 3D-Eindruck; mit einer notwendigen zweiten Ausrichtung durch Auswertung der Verhältnisse von Körperproportionen, das durch Parameter gekennzeichnet ist, welche eine andere Perspektive in der gleichen horizontalen Ebene beschreiben,
    - Durchführen von Größen- oder Farbadaption des gefundenen und einzufügenden Bildes,
    - Generierung mindestens eines 3D-Abbildes des Sprechers durch Ergänzung des Original 2D-Bildes mit einem aus diesem Bild kopierten zweiten Bild, in welchem das Absenderabbild ausgeschnitten und durch ein Bild aus einer anderen Perspektive ersetzt wird.

5.  Das Verfahren nach dem vorhergehenden Anspruch, wobei bei der Suche eines zweiten 2D-Abbildes zuerst in der aktuellen Nachricht nach Bildern aus einer anderen Perspektive, vorzugsweise unter Anwendung von Gesichtserkennungsverfahren bei der Anwesenheit mehrerer Personen, gesucht wird, sind in der aktuellen Nachricht keine weiteren verwertbaren Bilder aus einer anderen Perspektive vorhanden, so erfolgt die Suche im Speichersystem, es erfolgt dabei vorzugsweise eine Prüfung der Proportionen von Merkmalen des Absenderabbildes und/oder ob die zusätzlich gefundenen Bilder aus einer anderen Perspektive auf Einhaltung vorgegebene Grenzwerte einhalten, insbesondere Grenzwerte, die eine horizontale Aufnahmeebene, insbesondere Aufnahmewinkel in der Vertikalen, und eine vertikale Aufnahmeebene, insbesondere Aufnahmewinkel in der Horizontalen, beschreiben.

6. Das Verfahren nach einem oder mehreren der vorhergehenden Ansprüche, wobei die Sprachdaten der Nachricht und die Sprachdaten der Videonachricht verglichen werden und/oder eine Vielzahl von Sprachdaten der Videonachrichten miteinander verglichen werden, um den relevanten Bildbereich oder relevante Bilder der Videonachricht zu finden, wenn es eine Überlappung der Sprachnachrichten gibt.

7. Das Verfahren nach einem oder mehreren Ansprüche, wobei die 3D-Generierung, die Sprechererkennung, die Gesichtserkennung vollständig oder auch in Teilen auf einem Endgerät oder auf einem über ein Netzwerk zugänglichen Server ablaufen, wobei die Ablage von Informationen, die verschiedene Perspektiven der Abbilder des Absenders in den Nachrichten kennzeichnen, im Speichersystem eines Servers oder lokal auf einem Speicher eines mobilen Endgerätes abgelegt sind.

8. Das Verfahren nach einem oder mehreren der vorhergehenden Anspruche, wobei das 3D-Modell aus einer Vielzahl von 2D-Abbildern besteht, die gemeinsam mit Daten gespeichert werden, die die Perspektive/Ausrichtung eines einzelnen 2D-Abbildes beschreiben.

9. Das Verfahren nach einem oder mehreren der vorhergehenden Ansprüche, wobei ein Einfügen eines anderen Hintergrundes in Abhängigkeit vom festgestellten Aufenthaltsort des Absenders der Nachricht gewählt wird.

10. Digitales Nachrichtensystem zur Hervorhebung ausgewählter Objekte in Bild- und/oder Videodaten, in dem eine Vielzahl von personengebundenen Nachrichten auf einem Speichersystem gespeichert wird, wobei die Nachrichten mit Absenderadressen versehen sind, wobei ein Teil der Nachrichten ferner digitale Bilddaten oder Videodaten umfasst, mit den Komponenten:

    - Einheit zum Identifizieren (80) von Bildbereichen mit Gesichtern und/oder Personen in den digitalen Bilddaten oder Videodaten der Nachrichten, die die gleiche Absenderadresse aufweisen;
    - Einheit zum Bestimmen von absenderrelevanten Bildbereichen (90), die die Person des Absenders darstellen, aus den identifizierten Bildbereichen auf der Basis von Referenzbildern, die auf einem Speichersystem abgelegt sind, und/oder
    auf der Basis von Spracherkennungsverfahren unter Berücksichtigung von Sprachdaten in der Nachricht, in Referenzsprachdaten
    und/oder von Sprachdaten in den Videodaten, die miteinander verglichen werden,
    und/oder
    durch Bestimmen der Häufigkeit des Auftretens von Bildbereichen in Nachrichten mit der gleichen Absenderadresse;
    - Einheit zur Modifikation der Bild- und/oder Videodaten der empfangenen Nachrichten durch Hervorhebung des absenderrelavanten Bildbereichs.

11. Digitales Nachrichtensystem nach dem vorhergehenden System-Anspruch, wobei Mittel vorhanden sind, dass die Modifikation durch den Empfänger rückgängig gemacht werden kann, vorzugsweise indem ein Auswahldialog bereitgestellt wird.

12. Digitales Nachrichtensystem nach einem der vorhergehenden System-Ansprüche, **gekennzeichnet, durch** eine:

    - Schnittstelle zur Speicherung des identifizierten absenderrelevanten 2D-Bildbereiches in Zusammenhang mit der Absenderadresse und Parameter, die die Perspektive des Absenderabbildes charskterisieren,
    - Schnittstelle zur Übergabe des absonderrelevanten 2D-Bildbereiches und weiterer absenderrelevanter Bildbereiche aus vergangenen Nachrichten aus dem Speichersystem an ein Modul zur Generierung von 3D-Bilddaten,
    - Mittel zur Ermittlung der Perspektive/Ausrichtung des 2D-Abbilds anhand von abgebildeten Körperproportionen,
    - Mittel zur Suche eines zweiten 2D-Abbildes für den 3D-Eindruck; mit einer notwendigen zweiten Ausrichtung **durch** Auswertung der Verhältnisse von Körperproportionen, das **durch** Parameter gekennzeichnet ist, welche eine andere Perspektive in der gleichen horizontalen Ebene beschreiben,

- Mittel zur Generierung mindestens eines 3D-Abbildes des Nachrichtensprechers durch Ergänzung des Original 2D-Bildes mit einem aus diesem Bild kopierten zweiten Bild, in welchem das Absenderabbild ausgeschnitten und **durch** ein Bild aus einer anderen Perspektive ersetzt wird.

13. Digitales Nachrichtensystem nach dem vorhergehenden System-Anspruch, wobei das Mittel zur Suche so ausgebildet ist, das bei der Suche eines zweiten 2D-Abbildes zuerst in der aktuellen Nachricht nach Bildern aus einer anderen Perspektive vorzugsweise unter Anwendung von Gesichtserkennungsverfahren bei Anwesenheit mehrerer Personen gesucht wird,
sind in der aktuellen Nachricht keine weiteren verwertbaren Bilder aus einer anderen Perspektive vorhanden, so erfolgt die Suche im Archivspeicher des Mailsystems, es erfolgt dabei vorzugsweise eine Prüfung der Proportionen von Merkmalen des Absenderabbildes der zusätzlich gefundenen Bilder aus einer anderen Perspektive auf Einhaltung vorgegebener Grenzwerte, insbesondere Grenzwerte, die eine horizontale Aufnahmeebene, insbesondere Aufnahmewinkel in der Vertikalen, und eine vertikale Aufnahmeebene, insbesondere Aufnahmewinkel in der Horizontalen, beschreiben.

14. Digitales Nachrichtensystem nach einem oder mehreren der vorhergehenden System-Ansprüche, umfassen Mittel, die die Sprachdaten der Nachricht und die Sprachdaten der Videonachricht vergleichen und/oder eine Vielzahl von Sprachdaten der Videonachrichten miteinander verglichen werden, um den relevanten Bildbereich der Videonachricht zu finden, wenn es eine Überlappung der Sprachnachrichten gibt

15. Digitales Nachrichtensystem nach einem oder mehreren System-Ansprüchen, wobei die Mittel zur 3D-Generierung, zur Sprechererkennung, zur Gesichtserkennung vollständig oder in Teilen auf einem Endgerät oder auf einem über ein Netzwerk zugänglichen Server angeordnet sind, wobei die Ablage von Informationen, die verschiedenen Perspektiven der Abbilder des Absenders in den Nachrichten kennzeichnen, in einem Speichersystem des Servers oder einem Speicher eines mobilen Endgerätes abgelegt sind.

16. Digitales Nachrichtensystem nach einem oder mehreren der vorhergehenden System-Ansprüche, wobei das 3D-Modell aus einer Vielzahl von 2D-Abbildern besteht, die gemeinsam mit Daten auf dem Speichersystem gespeichert sind, die die Perspektive/Ausrichtung eines einzelnen 2D-Abbildes beschreiben.

17. Digitales Nachrichtensystem nach einem oder mehreren der vorhergehenden System-Ansprüche, wobei ein Einfügsystem gegeben ist, das einen anderen Hintergrund in Abhängigkeit vom festgestellten Aufenthaltsort des Absenders der Nachricht einfügt.

**Claims**

1. Method for emphasizing selected objects in digital picture and/or video data being stored in messages, wherein the messages are stored in a digital messaging system in which a multiplicity of person-related messages are stored on a storage system , wherein the messages being provided with sender addresses,

    - identifying (80) of picture regions with faces and/or persons in the digital picture data or video data in the messages on the digital messaging system having the same sender address;
    - determining of sender relevant picture regions (90) representing the person of the sender, on the basis of reference pictures that are stored on a storage system ,
    and / or
    on the basis of speaker recognition methods, speaker verification methods or speaker identification methods (70), taking into account speech data and picture data in the message, from reference speech data,
    and /or speech data in the video data, which are compared with each other,
    and / or
    by determining the frequency of occurrence of picture regions in messages having the same sender address;
    - modification of the picture data and/or video data of the received messages through emphasizing of the sender relevant picture region.

2. The method according to the preceding Claim, wherein the modification is performed in such a way that it can be undone by the recipient, preferably by providing a menu dialog.

3. The method according to one or more of the preceding Claims, wherein the identified picture regions are used to generate a 3D model.

4. The method according to the preceding Claim, **characterized by**, if a picture region is identified as sender-relevant, the following steps are executed:

- storing of the identified sender-relevant 2D picture region in conjunction with the sender address and parameters that characterize the perspective of the sender image,
- transferring the sender-relevant 2D picture region, and further sender-relevant picture regions from past messages from the storage system to a module for generating 3D picture data,
- determining of the perspective/orientation of the 2D image on the basis of imaged body proportions,
- searching for a second 2D image for the 3D impression; with a necessary second orientation through evaluation of the ratios of body proportions, which is characterize by parameters, that describe a different perspective in the same horizontal plane,
- performing of size or colour adaptation of the found picture to be inserted,
- generating at least one 3D image of the speaker by supplementing the original 2D picture with a second picture, which is copied from the latter picture, in which the sender image is cut out and replaced by a picture from a different perspective.

5. The method according to the preceding Claim, wherein in the search for a second 2D image, searching is first performed in the current message for pictures from a different perspective, preferably through a use of face recognition methods in the case of a plurality of persons being present and, if no further utilizable pictures from a different perspective are present in the current message, then the storage system is searched, in which case, preferably, the proportions of features of the sender image are checked and/or it is checked whether the additionally found pictures from a different perspective comply with predefined limit values, in particular limit values that describe a horizontal recording plane, especially recording angles in the vertical, and a vertical recording plane, especially recording angles in the horizontal.

6. The method according to one or more of the preceding Claims, wherein the speech data of the message and the speech data of the video message are compared and/or a multiplicity of speech data of the video messages are compared with one another, in order to find the relevant picture region or relevant pictures of the video messages, if there is an overlap of the voice messages.

7. The method according to one or more of the preceding Claims, wherein the 3D generation, the speaker recognition, the face recognition run in their entirety, or also partially, on a terminal device or on a server that is accessible via a network, wherein the information that characterizes the differing perspectives of the images of the sender in the messages is being stored in the storage system of a server or locally on a memory of a mobile terminal device.

8. The method according to one or more of the preceding Claims, wherein the 3D model consists of a multiplicity of 2D images, which are stored in conjunction with data that describes the perspective/orientation of a single 2D image.

9. The method according to one or more of the preceding Claims, wherein an insertion of a different background is selected in dependence on the determined location of the sender of the message.

10. Digital messaging system for emphasizing selected objects in digital picture and/or video data, in which a multiplicity of person-related messages are stored on a storage system, wherein the messages being provided with sender addresses, wherein a portion of the messages further comprising digital picture data or video data, having the components:

- unit for identifying (80) picture regions having faces and/or persons in the digital picture data or video data of the messages, which have the same sender address;
- unit for determining of sender relevant picture regions (90), which represent the person of the sender, from the identified picture region on the basis of reference pictures that are stored on a storage system, and / or on the basis of speaker recognition methods, taking into account speech data in the message, in reference speech data,
and / or speech data in the video data, which are compared with each other,
and / or
by determining the frequency of occurrence of picture regions in messages having the same sender address;
- unit for modification of the picture data or video data of the received messages through emphasizing of the sender-relevant picture region.

11. Digital messaging system according to the preceding system Claim, comprising means such that the modification can be undone by the recipient, preferably by providing a menu dialog.

12. Digital messaging system according to any of the preceding system Claims, **characterized by**:

- an interface for storing the identified sender-relevant 2D picture region in conjunction with the sender address and parameters that characterize the perspective of the sender image,
- an interface for transferring the sender-relevant 2D picture region and further sender-relevant picture regions from past messages from the storage system to a module for generating 3D picture data,
- means for determining the perspective/orientation of the 2D image on the basis of imaged body proportions,
- means for searching of a second 2D image for the 3D impression; having a necessary second orientation through evaluation of the ratios of body proportions, which is **characterized by** parameters that describe a different perspective in the same horizontal plane,
- means for generating at least one 3D image of the message speaker by supplementing the original 2D picture with a second picture, which is copied from the latter picture and in which the sender image is cut out and replaced by a picture from a different perspective.

13. Digital messaging system according to the preceding system Claim, wherein the means for searching are realized in such a way that, in the search for a second 2D image, searching is first performed in the current message for pictures from a different perspective, preferably through a use of face recognition methods in the case of a plurality of persons being present and, if no further utilizable pictures from a different perspective are present in the current message, then the archive memory of the mail system is searched, wherein preferably the proportions of features of the sender image of the additionally found pictures from a different perspective for compliance with predefined limit values are checked, in particular limit values that describe a horizontal recording plane, especially recording angles in the vertical, and a vertical recording plane, especially recording angles in the horizontal.

14. Digital messaging system according to one or more of the preceding system Claims, comprising means which compare the speech data of the message and the speech data of the video message and/or a multiplicity of speech data of the video messages with one another, in order to find the relevant picture region of the video message, if there is an overlap of the voice messages.

15. Digital messaging system according to one or more of the preceding system Claims, wherein the means for 3D generation, for speaker recognition, for face recognition are disposed in their entirety, or partially, on a terminal device or on a server that is accessible via a network, wherein the information that characterizes the differing perspectives of the images of the sender in the messages is being stored in a storage system of the server or in a memory of a mobile terminal device.

16. Digital messaging system according to one or more of the preceding system Claims, wherein the 3D model consists of a multiplicity of 2D images, which are stored on the storage system in conjunction with data that describes the perspective/orientation of a single 2D image.

17. Digital messaging system according to one or more of the preceding system Claims, wherein there is an insertion system, which inserts a different background in dependence on the determined location of the sender of the message.

## Revendications

1. Procédé d'accentuation d'objets sélectionnés dans des informations imagées et/ou vidéos numériques stockées dans des messages, dans lequel les messages sont stockés dans un système de messagerie numérique stockant dans un système de stockage de multiples messages relatifs à des individus, dans lequel les messages sont fournis avec des adresses d'expéditeur,

- l'identification (80) de régions imagées comportant des visages et/ou des personnes au sein des informations imagées ou de données vidéos au sein des messages sur le système de messagerie numérique ayant la même adresse d'expéditeur ;
- la détermination de régions imagées (90) afférentes à l'expéditeur représentant la personne de l'expéditeur ,

sur la base d'images de référence stockées sur un système de stockage,
et/ou
des méthodes de vérification ou d'identification de l'orateur (70) sur la base de reconnaissance de l'orateur, en prenant en compte des données vocales ou des données imagées au sein du message à partir de données vocales de référence,
et /ou des données vocales au sein des données vidéo, comparées les unes aux autres,
et/ou par la détermination de la fréquence d'occurrence des régions imagées au sein des messages émanant du même expéditeur;
- la modification d'informations imagées et/ou vidéos des messages reçus au moyen d'une accentuation de la région d'image afférente à l'expéditeur.

2. Le procédé selon la revendication précédente, dans laquelle la modification est réalisée de telle manière à ne pas pouvoir être défaite par le destinataire du message, de préférence au moyen d'un menu de dialogue.

3. Le procédé selon l'une ou plusieurs des revendications précédentes, dans laquelle les régions imagées identifiées sont utilisée pour générer un modèle 3D.

4. Le procédé selon la revendication précédente, **caractérisée par** l'exécution des étapes suivantes lorsque d'une région imagée est identifiée comme étant afférente à l'expéditeur :

   - la stockage de la région imagée 2D afférente à l'expéditeur identifié, conjointement avec l'adresse de l'expéditeur et les paramètres caractérisant la perspective de l'image de l'expéditeur ;
   - le transfert de la région imagée 2D afférente à l'expéditeur, ainsi que des régions imagées supplémentaires afférentes à l'expéditeur, à partir de messages passées depuis le système de stockage vers un module de génération d'informations imagées 3D ;
   - la détermination de la perspective/orientation de l'image 2D sur la base de proportions corporelles imagées ;
   - la recherche d'une seconde image 2D en vue d'une impression 3D ; au moyen d'une seconde orientation nécessaire via une évaluation des ratios corporels, laquelle est **caractérisée par** des paramètres décrivant une perspective différente dans le même plan horizontal,
   - la réalisation d'une adaptation de couleur ou de taille de l'image à insérer,
   - la génération d'au moins une image 3D de l'orateur par le complément de l'image 2D originelle à une seconde image, copiée depuis cette dernière, dans laquelle l'image de l'expéditeur est coupée et remplacée par une image présentant une perspective différente.

5. Le procédé selon la revendication précédente, dans laquelle la recherche d'une seconde image 2D, l'on réalise d'abord une recherche d'images depuis une perspective différente dans le message courant, de préférence au moyen de l'utilisation de méthodes de reconnaissance de visage lorsque plusieurs personnes sont présentes et, dans le cas où l'on ne dispose pas dans le message courant d'image supplémentaire utilisable ayant une perspective différente présente, alors l'on procède à une recherche dans le système de stockage et, de préférence, les proportions et caractéristique de l'image de l'expéditeur sont vérifiées et/ou testées pour déterminer si les images supplémentaires de perspective différente satisfont à des valeurs limites prédéfinies, en particulier des valeurs limites décrivant un plan d'enregistrement horizontal, notamment des angles d'enregistrement vertical, et un plan d'enregistrement vertical, spécialement des angles d'enregistrement horizontaux.

6. Le procédé selon l'une ou plusieurs des revendications précédentes, dans lequel les données vocales du message et les données vocales du message vidéo sont comparées et/ou une multiplicité de données vocales des messages vidéo sont comparées les unes au autres, afin de déterminer la région imagée pertinente ou des images pertinentes au sein des messages vidéos, lorsqu'il y a un recouvrement de messages vocaux.

7. Le procédé selon l'une ou plusieurs des revendications précédentes, dans lequel la génération 3D, la reconnaissance de l'orateur, la reconnaissance de visage s'exécutent entièrement, ou également partiellement, sur un dispositif terminal ou sur un serveur accessible via un réseau, dans lequel l'information caractérisant les perspectives distinctives des images de l'expéditeur au sein des messages est stockée dans le système de stockage d'un serveur ou est stockée localement dans une mémoire d'un dispositif terminal mobile.

8. Le procédé selon l'une ou plusieurs des revendications précédentes; dans lequel le module 3D consiste en une multiplicité d'images 2D, lesquelles sont stockées conjointement avec des données descriptive l'orientation/perspective d'une image 2D simple.

9. Le procédé selon l'une ou plusieurs des revendications précédentes, dans lequel l'insertion d'un arrière plan différent est sélectionné en fonction de la localisation déterminée de l'expéditeur du message.

10. Système de messagerie numérique pour l'accentuation d'objets sélectionnés dans des informations imagées et/ou vidéos numériques, dans lequel de multiples messages relatifs à des individus sont stockés dans un système de stockage, dans lequel les messages sont fournis avec des adresses d'expéditeur, dans lequel une parti des messages comportent des informations imagées ou vidéos numériques, doté des composants :

    - une unité d'identification (80) de régions imagées comportant des visages et/ou des personnes au sein des informations imagées ou de données vidéos au sein des messages ayant la même adresse d'expéditeur ;
    - une unité de détermination de régions imagées (90) afférentes à l'expéditeur à partir des régions imagées identifiées, correspondant à la personne de l'expéditeur, sur la base d'images de référence stockées sur un système de stockage,
    et/ou
    la prise en compte de données vocales dans le message, par référence aux données vocales, sur la base de méthode de reconnaissance de l'orateur,
    et/ou de données vocales au sein de données vidéo, lesquelles sont comparées l'une par rapport à l'autre, et/ou
    par la détermination de la fréquence d'occurrence de régions imagées ayant le même expéditeur ;
    - une unité de modification d'informations imagées ou vidéo des messages reçus au moyen d'une accentuation de la région imagée afférente à l'expéditeur.

11. Système de messagerie numérique selon la revendication de système précédente, comprenant des moyens assurant que la modification de peut être défaite par le destinataire du message, de préférence au moyen d'un menu de dialogue.

12. Système de messagerie numérique selon l'une quelconque des revendications de système précédente, **caractérisé par** :

    - une interface de stockage d'une région imagée 2D afférente à l'expéditeur identifié, conjointement avec l'adresse de l'expéditeur et les paramètres caractérisant la perspective de l'image de l'expéditeur ;
    - une interface de transfert de la région imagée 2D afférente à l'expéditeur, ainsi que des régions imagées supplémentaires afférentes à l'expéditeur, à partir de messages passées depuis le système de stockage vers un module de génération d'informations imagées 3D ;
    - des moyens de détermination de la perspective/orientation de l'image 2D sur la base de proportions corporelles Imagées ;
    - des moyens de recherche d'une seconde image 2D en vue d'une impression 3D ; au moyen d'une seconde orientation nécessaire via une évaluation des ratios corporels, laquelle est **caractérisée par** des paramètres décrivant une perspective différente dans le même plan horizontal ,
    - des moyens de génération d'au moins une image 3D de l'orateur du message par le complément de l'image 2D originelle à une seconde image, copiée depuis cette dernière, dans laquelle l'image de l'expéditeur est coupée et remplacée par une image présentant une perspective différente.

13. Le système de messagerie numérique selon la revendication de système précédente, dans les moyens de recherche sont réalisée de telle manière que dans la recherche d'une seconde image 2D, l'on réalise d'abord une recherche d'images depuis une perspective différente dans le message courant, de préférence au moyen de l'utilisation de méthodes de reconnaissance de visage lorsque plusieurs personnes sont présentes et, dans le cas où l'on ne dispose pas dans le message courant d'image supplémentaire utilisable ayant une perspective différente présente, alors l'on procède à une recherche dans la mémoire d'archivage du système de messagerie et, de préférence, les proportions des caractéristique de l'image de l'expéditeur des images supplémentaires de perspective différente sont testées par rapport à des valeurs limites prédéfinies, en particulier des valeurs limites décrivant un plan d'enregistrement horizontal, notamment des angles d'enregistrement verticaux et un plan d'enregistrement vertical, spécialement des angles d'enregistrement horizontaux.

14. Le système de messagerie numérique selon l'une ou plusieurs des revendications de système précédentes, comprenant des moyens pour comparer les données vocales du message avec les données vocales du message vidéo et/ou une multiplicité de données vocales des messages vidéos les unes par rapport aux autres, afin de trouver la région imagée pertinente du message vidéo, lorsqu'il y a un recouvrement de messages vocaux.

**15.** Le système de messagerie numérique selon l'une ou plusieurs des revendications de système précédentes dans lequel les moyens de génération 3D, pour la reconnaissance de l'orateur, pour la reconnaissance de visage sont localisés entièrement, ou également partiellement, sur un dispositif terminal ou sur un serveur accessible via un réseau, dans lequel l'information caractérisant les perspectives distinctives des images de l'expéditeur au sein des messages est stockée dans le système de stockage d'un serveur ou est stockée localement dans une mémoire d'un dispositif terminal mobile.

**16.** Le système de messagerie numérique selon l'une ou plusieurs des revendications de système précédentes, dans lequel le module 3D consiste en une multiplicité d'images 2D, lesquelles sont stockées conjointement avec des données descriptive l'orientation/perspective d'une image 2D simple.

**17.** Le système de messagerie numérique selon l'une ou plusieurs des revendications de système précédentes, comportant un système d'introduction, pour l'introduction d'un arrière plan différent dépendant de la localisation déterminée de l'expéditeur du message.

Fig. 1

Fig. 2a

Fig. 2b

Hintergrund mit Gegenständen

Sprecher

Gerätekamera        **Fig. 3a**

Hintergrund mit Gegenständen

Sprecher

Gerätekamera        **Fig. 3b**

**EP 2 337 326 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1648151 A1
- DE 102004014189 A1
- WO 2006047347 A
- EP 1412917 B1
- EP 0991023 B1
- US 4925294 A1
- DE 69628662 T2